# EUROPEAN PATENT SPECIFICATION

(11) **EP 3 312 420 B1**
(45) Date of publication and mention of the grant of the patent: **10.04.2019**
(21) Application number: 17154936.3
(22) Date of filing: 07.02.2017
(51) Int. Cl.: F04B 1/00, F02F 7/00, F16M 1/021, H02K 29/08, H02K 7/18, H02K 11/215

(54) **ENGINE**
MOTOR
MOTEUR

(30) Priority: 20.10.2016 JP 2016206127
(43) Date of publication of application: 25.04.2018
(73) Proprietor: Yamaha Hatsudoki Kabushiki Kaisha, Iwata-shi, Shizuoka 438-8501 (JP)
(72) Inventor: MATSUSHITA, Yasushi, Iwata-shi, Shizuoka 438-8501 (JP); NAKAGAWA, Masayuki, Iwata-shi, Shizuoka 438-8501 (JP)
(74) Representative: Grünecker Patent- und Rechtsanwälte PartG mbB

(56) References cited:
- EP-A1- 2 574 825
- EP-A1- 2 963 784
- CN-A- 102 635 478
- US-A1- 2012 160 208

## Description

The present invention relates to an engine, and in particular to an engine for a straddle-type vehicle.

An engine for a straddle-type vehicle generally drives a generator and an oil pump with rotational power from a crankshaft. For example, a rotor of the generator is fixed to the right axial end of the crankshaft in the engine in JP 2014 240628 A and in EP 2 574 825 A1.

A drive gear of the oil pump is provided on right shaft portion of the crankshaft. An opening for allowing access to the oil pump is formed on the right side wall of the crankcase. The opening is closed by an oil pump cover. The oil pump cover is detachably attached to the crankcase with a fixing member such as a bolt. Moreover, a stator of the abovementioned generator is fixed to the oil pump cover with a fixing member such as a bolt.

Recently, a generator with motor function has been installed in an engine for a straddle-type vehicle in place of the conventional generator. A generator with motor function is expected to provide a larger volume of generated electricity or a larger motor torque than the conventional generator. There is a problem in that the magnetic sound generated when driving the generator with motor function also increases if the volume of generated electricity or the motor torque is increased.

The magnetic sound is amplified by minute vibrations in the structure around the generator with motor function. Therefore, in order to reduce the magnetic sound in the abovementioned engine in JP 2014 240628 A, an increase in the stiffness of the oil pump cover or an increase in the number of bolts for fixing the oil pump cover may be considered. However, there is a problem that by doing so, the weight of the engine will increase.

Moreover, when the thickness of the oil pump cover is increased in order to increase the stiffness of the oil pump cover, or if the number of bolts for fixing the oil pump cover is increased, there is a problem that the housing space for the generator with motor function will need to be made narrower. Alternatively, there will be a need to consider the positional relationship between the bolts (bolt seats) and the generator with motor function. In particular, there is a concern that the layout for the generator with motor function may be restricted because the generator with motor function is larger than a conventional generator.

It is an object of the present invention is to reduce the magnetic sound and improve the layout ability of the generator with motor function while suppressing an increase in the weight of the engine for an engine having a generator with motor function mounted therein. According to the present invention said object is solved by an engine having features of independent claim 1. Preferred embodiments are laid down in the dependent claims.

An engine according to a first aspect of the present invention includes a crankcase, a crankshaft, a generator with motor function, and an oil pump. At least a portion of the crankshaft is housed in the crankcase. The crankshaft rotates around an axis. The generator with motor function includes a rotor and a stator. The rotor is fixed to the crankshaft. The stator is fixed to the crankcase while the crankshaft is passing through the stator. The oil pump is housed in the crankcase and is connected to the crankshaft. The crankshaft includes a first shaft portion and a second shaft portion. The first shaft portion extends one way in the axial direction from the inside of the crankcase toward the outside, and is fixed to the rotor. The second shaft portion extends the other way in the axial direction from the inside of the crankcase toward the outside, and is connected to the oil pump. The crankcase includes a crankcase body and an oil pump cover. The crankcase body includes a first side wall and a second side wall. The first shaft portion is passing through the first side wall. The second shaft portion is disposed in the second side wall. The second side wall includes an opening portion that is communicated with a housing space for the oil pump. The oil pump cover closes the opening portion of the second side wall. The second shaft portion is passing through the oil pump cover. The stator is fixed to the first side wall of the crankcase body.

The stator of the generator with motor function is fixed to the first side wall of the crankcase body. Because the first side wall of the crankcase body is generally a portion of the component for housing the crankshaft, the stiffness of the first side wall is assured in comparison to the oil pump cover. For example, the first side wall of the crankcase body is larger or is thicker than the oil pump cover. As a result, magnetic sound can be limited to a smaller amount in comparison to when the stator is fixed to the oil pump cover.

If the stator was hypothetically fixed to the oil pump cover, the thickness of the oil pump cover would need to be increased or the number of bolts for fixing the oil pump cover would need to be increased in order to limit the amount of the magnetic sound. In comparison to the above, the amount of the magnetic sound can be limited by fixing the stator to the first wall side of the crankcase body in the present invention. Consequently, an increase in the weight of the engine can be suppressed while suppressing the magnetic sound.

Furthermore, the oil pump is provided on the second shaft portion instead of the first shaft portion on which the rotor of the generator with motor function is provided. As a result, an attachment portion of the generator with motor function to the first shaft portion can be more easily assured in comparison to when the oil pump is provided on the first shaft portion. In particular, the generator with motor function is relatively larger in size than the conventional generator and therefore the ability to assure the attachment portion is more effective with respect to improving the layout ability.

The engine may further include a cam chain sprocket and a cam chain. The cam chain sprocket may be connected to the second shaft portion. The cam chain may be wound around the cam chain sprocket. In this case, the cam chain is disposed on the opposite side with respect to the generator with motor function. As a result, the freedom of design of the first wall side is improved and the stiffness can be assured easily. Moreover, the housing space for the generator with motor function can be assured more easily.

The oil pump may include a pump gear and a pump body. The pump gear may be connected to the second shaft portion. The pump body may be connected to the pump gear. The pump body may be aligned with the cam chain in the radial direction of the cam chain sprocket. In this case, the pump body can be disposed in a compact manner.

The engine may further include a cooling fan connected to the first shaft portion. In this case, the generator with motor function can be cooled more effectively because the cooling fan is disposed near the generator with motor function. Furthermore, while the calorific content of the generator with motor function is greater than that of a conventional generator, a large space for heat dissipation can be easily assured by using the space in which the cooling fan is disposed.

The engine may further include a sensor for detecting the phase of the crankshaft. The sensor may be fixed to the stator. In this case, the propagation of heat from the crankcase toward the sensor can be suppressed in comparison to when the sensor is attached to the crankcase. As a result, the effect of heat on the sensor can be suppressed.

The sensor may be a Hall sensor. In this case, the propagation of the heat from the crankcase on the sensor can be more effectively suppressed because the heat resistance of a Hall sensor is low.

The crankcase may include a first opening and a protruding portion. The first shaft portion may protrude from the first opening. The protruding portion may be provided around the first opening and may protrude in the axial direction. The stator may be fixed directly to the protruding portion. In this case, the stator can be fixed directly to the crankcase with a simple structure.

The engine may further include an oil seal for providing a seal between the crankcase and the crankshaft. The crankcase may include a recessed portion provided around the first opening and recessed from the outer surface of the crankcase. The oil seal may be attached to the recessed portion. In this case, the oil seal can be attached and detached easily from the outside of the crankcase. Consequently, the maintenance performance of the engine can be improved.

The crankcase may further include a first split body on the first shaft portion side and a second split body on the second shaft portion side. The first split body and the second split body may be separate from each other. In this case, the provision of a joint seam due to the division of the first side wall may be avoided. Consequently, the stiffness of the first side wall can be further assured.

The crankshaft may include a crank web which extends in the radial direction. The first shaft portion may extend one way in the axial direction from the crank web. The second shaft portion may extend the other way in the axial direction from the crank web.

FIG. 1 is a side view of the straddle-type vehicle according to an embodiment.
FIG. 2 is a cross-sectional view of an engine according to an embodiment.
FIG. 3 is an enlarged cross-sectional view around a generator with motor function and a cooling fan.
FIG. 4 is a view of a stator as seen from the axial direction of the crankshaft.
FIG. 5 is a view of the stator as seen from the axial direction of the crankshaft.
FIG. 6 is a view of a first side wall of the crankcase, the stator, and a sensor unit as seen from the axial direction.
FIG. 7 is a view of the first side wall of the crankcase as seen from the axial direction.

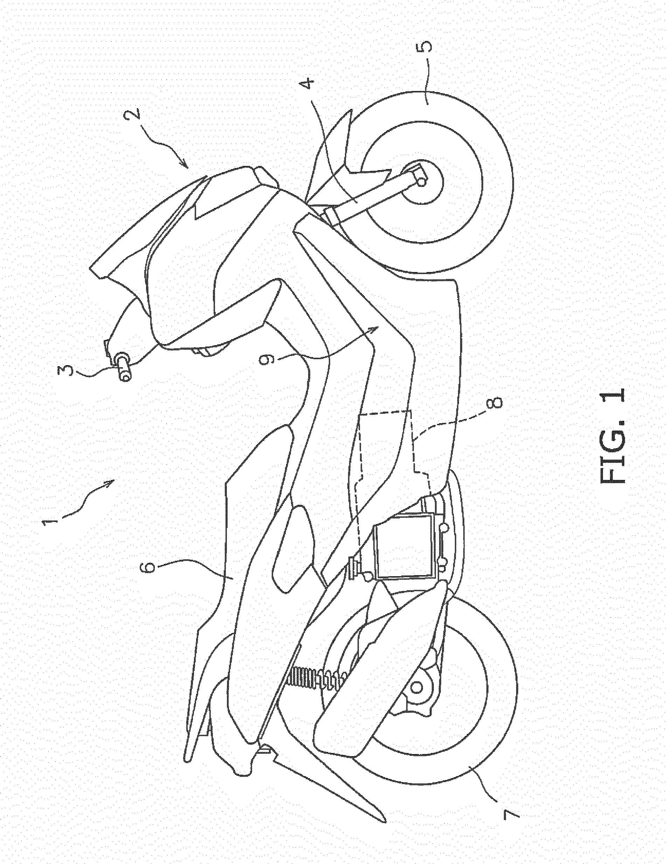

The following is a description of an engine according to the present embodiment with reference to the drawings. FIG. 1 is a side view of a straddle-type vehicle 1 on which the engine according to the present embodiment is mounted. The straddle-type vehicle 1 according to the present embodiment is a scooter-type vehicle. As illustrated in FIG. 1, the straddle-type vehicle 1 includes a vehicle body 2, a handle 3, a steering device 4, a front wheel 5, a seat 6, a rear wheel 7, and an engine 8.

The handle 3 is coupled to the front wheel 5 via the steering device 4. The seat 6 is supported on the vehicle body 2. A foot board 9 is disposed in front of and below the seat 6. The foot board 9 has a planar shape. The foot board 9 may have a shape in which the middle portion in the vehicle width direction protrudes upward to form a convex shape.

The engine 8 is disposed under the seat 6. The engine 8 is swingably supported on the vehicle body 2. The following describes in detail the structure of the engine 8. The up and down, left and right, front and rear directions in the following explanation signify the directions while the engine 8 is mounted on the straddle-type vehicle 1.

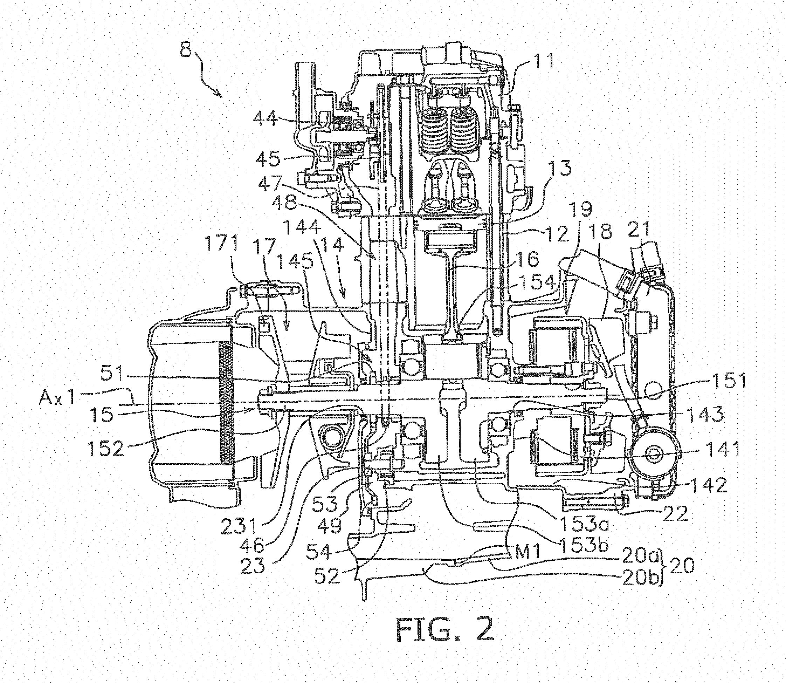

FIG. 2 is a cross-sectional view of the engine 8. As illustrated in FIG. 2, the engine 8 includes a cylinder head 11, a cylinder 12, a piston 13, a crankcase 14, and a crankshaft 15. A cam shaft 44 is disposed inside the cylinder head 11. A first cam chain sprocket 45 is connected to the cam shaft 44.

The cylinder head 11 is connected to the cylinder 12. The cylinder 12 is connected to the crankcase 14. The piston 13 is disposed inside the cylinder 12. The crankshaft 15 is coupled to the piston 13 via a connecting rod 16. The crankshaft 15 is housed in the crankcase 14 and rotates around an axis Ax1 of the crankshaft 15. In the following explanation, the "axial direction" signifies the direction in which the axis Ax1 of the crankshaft 15 extends.

The crankshaft 15 includes a first shaft portion 151, a second shaft portion 152, and crank webs 153a and 153b. The crank webs 153a and 153b are positioned between the first shaft portion 151 and the second shaft portion 152 and are disposed inside the crankcase 14. The crank webs 153a and 153b extend in the radial direction. The crank webs 153a and 153b are disposed with a gap therebetween in the axial direction. The crank webs 153a and 153b communicate with each other with a crank pin 154 connected to the connecting rod 16.

The first shaft portion 151 extends one way in the axial direction from the inside of the crankcase 14 toward the outside. The first shaft portion 151 extends one way in the axial direction from the crank web 153a. The first shaft portion 151 protrudes one way in the axial direction from the crankcase 14. The second shaft portion 152 extends in the other way in the axial direction from the inside of the crankcase 14 toward the outside. The second shaft portion 152 extends in the other way in the axial direction from the crank web 153b. The second shaft portion 152 protrudes the other way in the axial direction from the crankcase 14. The second shaft portion 152 is coupled to a drive pulley 171 of a transmission 17.

A second cam chain sprocket 46 is connected to the second shaft portion 152. A cam chain 47 is wound on the first cam chain sprocket 45 and the second cam chain sprocket 46. A cam chain chamber 48 is provided in the cylinder head 11, the cylinder 12, and the crankcase 14, and the cam chain 47 is disposed inside the cam chain chamber 48.

The crankcase 14 includes a crankcase body 20 and an oil pump cover 23. The crankcase body 20 includes a first split body 20a on the first shaft portion 151 side and a second split body 20b on the second shaft portion 152 side. The first split body 20a and the second split body 20b are separate from each other. A joining surface M1 of the first split body 20a and the second split body 20b extends along a flat surface perpendicular to the axis Ax1 of the crankshaft.

The first split body 20a includes a first side wall 141 and a cover portion 142. The first side wall 141 covers the crank web 153a in the axial direction. The first side wall 141 overlaps the crank web 153a as seen in the axial direction. The first side wall 141 is formed integrally with the first split body 20a. In other words, the first side wall 141 is formed continuously with the first split body 20a. The first side wall 141 is a portion without a joint seam.

The first side wall 141 includes a first opening 143. The first shaft portion 151 of the crankshaft 15 passes through the first opening 143. The first shaft portion 151 protrudes from the first opening 143. The cover portion 142 protrudes in the axial direction from the first side wall 141. The cover portion 142 extends in the circumferential direction of the axis Ax1 of the crankshaft 15. The cover portion 142 is disposed in a position further away in the radial direction from the axis Ax1 than a rotor 24 of a generator with motor function 19.

The second split body 20b includes a second side wall 144. The second side wall 144 adjoins the cam chain chamber 48. The second side wall 144 is disposed between the cam chain chamber 48 and the transmission 17. The second side wall 144 includes an opening portion 145. The second shaft portion 152 is disposed in the opening portion 145.

The oil pump cover 23 is a separate body from the crankcase body 20. The oil pump cover 23 is attached to the second side wall 144. The oil pump cover 23 closes the opening portion 145 of the second side wall 144. The oil pump cover 23 includes a second opening 231. The second shaft portion 152 passes through the second opening 231. The second shaft portion 152 protrudes from the second opening 231.

The engine 8 includes a cooling fan 18 and the generator with motor function 19. The cooling fan 18 is attached to the first shaft portion 151 of the crankshaft 15. The generator with motor function 19 is disposed between the crankcase 14 and the cooling fan 18. The engine 8 includes a radiator 21. The radiator 21 is disposed outside of the cooling fan 18 in the axial direction.

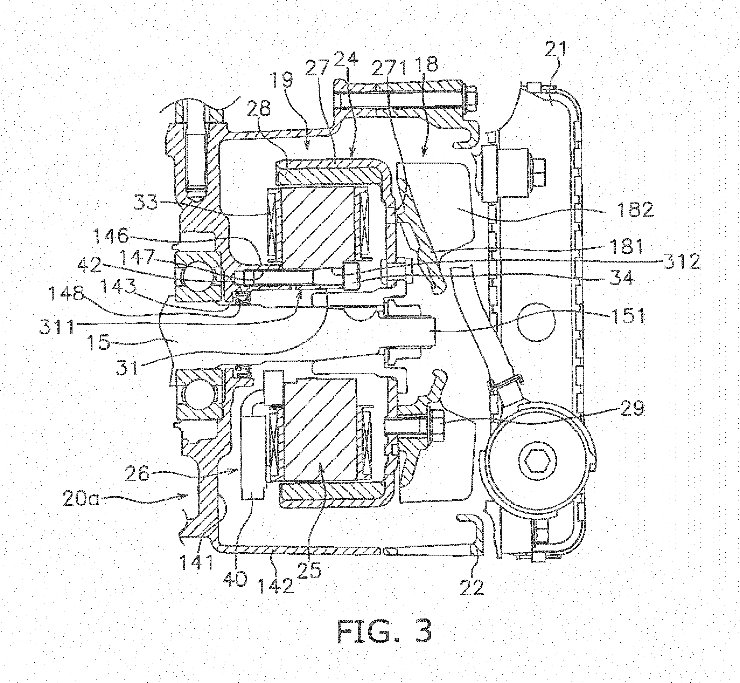

FIG. 3 is an enlarged cross-sectional view around the generator with motor function 19 and the cooling fan 18. As illustrated in FIG. 3, the cooling fan 18 is disposed coaxially with the crankshaft 15. The cooling fan 18 is a centrifugal fan for blowing air in the centrifugal direction. The cooling fan 18 includes a disk-shaped fan body 181 and a plurality of vane portions 182. The plurality of vane portions 182 are disposed on the fan body 181. The cooling fan 18 is fixed to the belowmentioned rotor 24 of the generator with motor function 19 with a bolt 29.

The engine 8 includes a housing member 22. The housing member 22 is attached to the cover portion 142 of the crankcase 14. The housing member 22 overlaps the crankcase 14 as seen from the axial direction. The generator with motor function 19 and the cooling fan 18 are disposed inside a housing space configured by the cover portion 142 of the crankcase 14 and the housing member 22.

The generator with motor function 19 is connected to an electrical circuit which is not included in the drawings. The generator with motor function 19 receives electrical power supplied by the electric circuit thereby functioning as a motor. The generator with motor function 19 functions as a starter motor for starting the engine 8. The generator with motor function 19 may function as an assist motor for supplementing the driving power for the engine 8. Moreover, the generator with motor function 19 is able to function as a generator. The generator with motor function 19 supplies electrical power to the electric circuit when functioning as the generator.

The generator with motor function 19 includes the rotor 24, a stator 25, and a sensor unit 26. The rotor 24 is fixed to the first shaft portion 151 of the crankshaft 15 and rotates with the crankshaft 15. The rotor 24 includes a rotor core 27 and a permanent magnet 28. The rotor core 27 has a cylindrical shape and opens toward the crankcase 14. The permanent magnet 28 is attached to the inner circumferential surface of the rotor core 27. Moreover, a through-hole 271 is provided in the rotor core 27 to allow for the passage of air. The through-hole 271 penetrates the rotor core 27 in the axial direction.

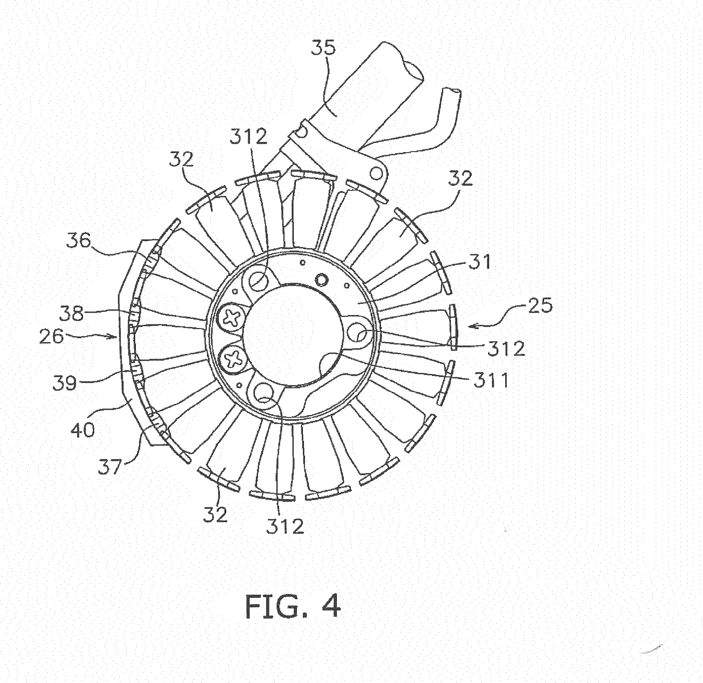

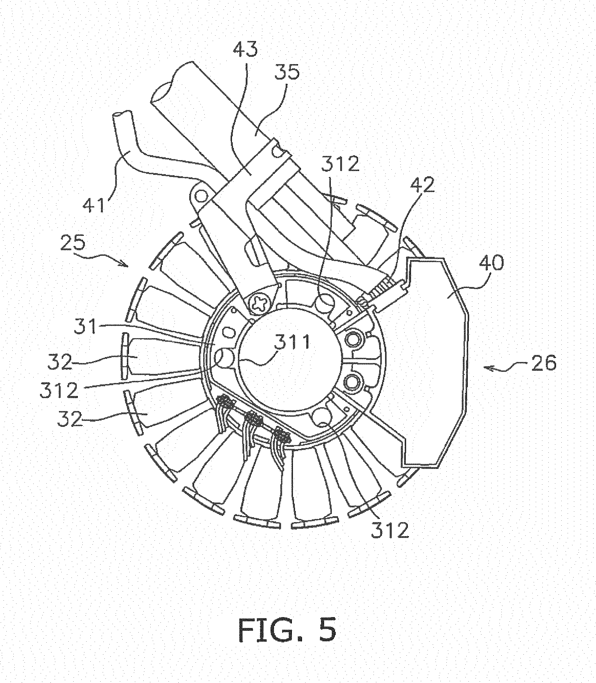

The stator 25 is fixed to the crankcase 14 and faces the rotor 24. FIG. 4 is a view of the stator 25 as seen in the direction facing the second shaft portion 152 from the first shaft portion 151 of the crankshaft 15. FIG. 5 is a view of the stator 25 as seen in the direction facing the first shaft portion 151 from the second shaft portion 152 of the crankshaft 15. As illustrated in FIGS. 4 and 5, the stator 25 includes a stator core 31 and a plurality of teeth 32. In the drawings, only a portion of the plurality of teeth 32 are provided with the reference numeral 32.

The stator core 31 includes an opening 311 which the first shaft portion 151 of the crankshaft 15 passes therethrough. The plurality of teeth 32 extend in the radial direction from the stator core 31. The plurality of teeth 32 are disposed in the circumferential direction with gaps therebetween.

As illustrated in FIG. 3, the stator 25 includes a stator coil 33. The stator coil 33 is wound onto the plurality of teeth 32. As illustrated in FIG. 5, a coil cable 35 is connected to the stator coil 33.

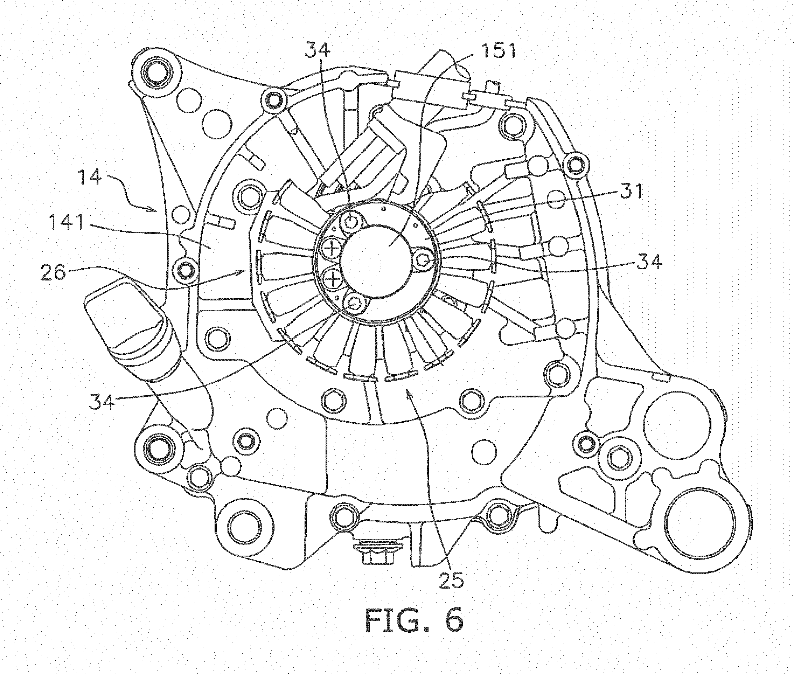

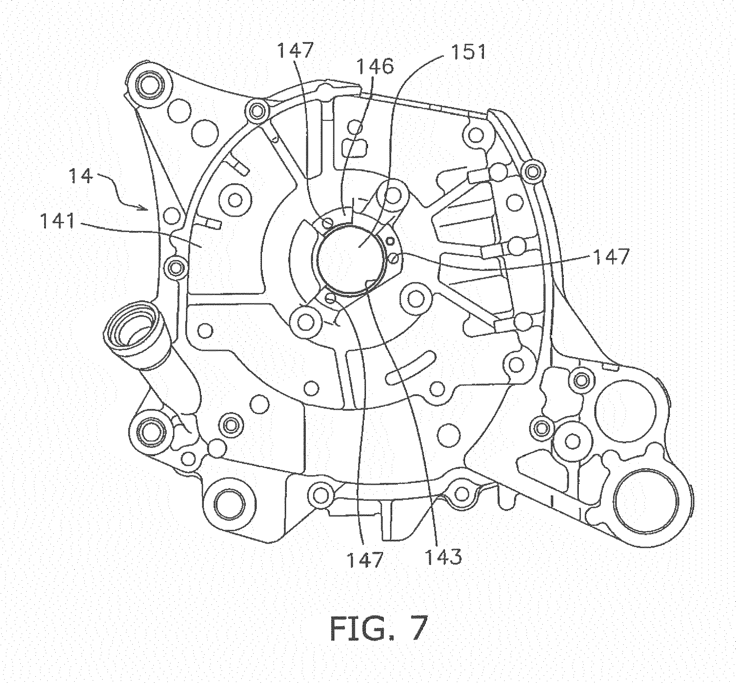

The stator 25 is fixed directly to the first side wall 141 of the crankcase 14 with bolts 34. Specifically, the stator 25 is fixed directly to a protruding portion 146 of the first side wall 141. FIG. 6 is a view of a first side wall 141 of the crankcase 14, the stator 25, and the sensor unit 26 as seen from the axial direction. FIG. 7 is a view of the first side wall 141 of the crankcase 14 as seen from the axial direction.

As illustrated in FIGS. 3 and 7, the protruding portion 146 is provided around the first opening 143 and protrudes in the axial direction. As illustrated in FIG. 4, the stator core 31 includes a plurality of holes 312. As illustrated in FIG. 7, a plurality of holes 147 are provided in the protruding portion 146. The plurality of holes 147 of the protruding portion 146 are disposed in correspondence to the plurality of holes 312 of the stator core 31. The stator 25 is fixed to the protruding portion 146 by the bolts 34 that pass through the holes 312 of the stator core 31 and the holes 147 of the protruding portion 146.

As illustrated in FIG. 3, the first side wall 141 includes a recessed portion 148. The recessed portion 148 is provided around the first opening 143 and is disposed inside the protruding portion 146. The recessed portion 148 has a shape that is recessed from the outer surface of the crankcase 14 toward the inside of the crankcase 14. An oil seal 42 is attached to the recessed portion 148. The oil seal 42 seals the space between the crankcase 14 and the crankshaft 15.

The sensor unit 26 is attached to the stator 25. As illustrated in FIG. 4, the sensor unit 26 includes a plurality of sensors 36-39 and a coupling portion 40. The plurality of sensors 36-39 include a first sensor 36, a second sensor 37, a third sensor 38, and a fourth sensor 39. The first to fourth sensors 36-39 are disposed in the gaps between the teeth 32 of the stator 25.

The first to fourth sensors 36-39 are magnetic sensors. For example, the first to fourth sensors 36-39 are Hall sensors. The first sensor 36 detects the absolute position of the rotor 24 by detecting changes in the magnetic flux of the permanent magnet 28 caused by the rotation of the rotor 24. The second to fourth sensors 37-39 detect the phase of the rotor 24 by detecting changes in the magnetic flux of the permanent magnet 28 caused by the rotation of the rotor 24.

The coupling portion 40 couples the first to fourth sensors 36-39. The coupling portion 40 is connected to the first to fourth sensors 36-39. As illustrated in FIG. 5, a sensor cable 41 is connected to the sensor unit 26. The coil cable 35 and the sensor cable 41 are bundled together with a bracket 43. The bracket 43 is attached to the stator core 31.

As illustrated in FIG. 3, the sensor unit 26 is disposed facing the first side wall 141 of the crankcase 14. The coupling portion 40 faces the crankcase 14. The coupling portion 40 is disposed between the stator 25 and the first side wall 141 of the crankcase 14.

As illustrated in FIG. 2, the engine 8 includes an oil pump 49. The oil pump 49 is disposed in the housing space inside the second split body 20b. The housing space is communicated with the opening portion 145 of the second side wall 144. The oil pump cover 23 covers the oil pump 49. The oil pump cover 23 overlaps the oil pump 49 as seen in the axial direction.

The oil pump 49 is connected to the second shaft portion 152. Specifically, the oil pump 49 includes a first pump gear 51 and a pump body 52. The first pump gear 51 is connected to the second shaft portion 152. The first pump gear 51 is disposed in alignment with the second cam chain sprocket 46 in the axial direction. The first pump gear 51 is attached on the outer circumferential surface of the second shaft portion 152. The first pump gear 51 rotates integrally with the second shaft portion 152 around the axis.

The pump body 52 is aligned with the cam chain 47 in the radial direction of the cam chain sprocket 46. That is, the pump body 52 overlaps the cam chain 47 as seen in the radial direction of the second cam chain sprocket 46. The pump body 52 is connected to the first pump gear 51. A second pump gear 54 is attached to an input shaft 53 of the pump body 52. The second pump gear 54 meshes with the first pump gear 51.

The stator 25 of the generator with motor function 19 is fixed to the first side wall 141 of the crankcase body 20 in the engine 8 according to the present embodiment as discussed above. The stiffness of the first side wall 141 is greater than the stiffness of the oil pump cover 23. For example, at least a portion of the first side wall 141 is thicker than the oil pump cover 23. Moreover, the first side wall 141 is formed integrally with the first split body 20a. Therefore, magnetic sound from the generator with motor function 19 can be kept at a low level by fixing the stator 25 directly to the first side wall 141 having high stiffness.

In comparison to when the stator 25 is fixed to the oil pump cover 23, there is no need to increase the thickness of the oil pump cover 23 or increase the number of bolts for fixing the oil pump cover 23 in order to keep the level of the magnetic sound at a low level. Consequently, an increase in the weight of the engine 8 can be suppressed.

The oil pump 49 is connected to the second shaft portion 152 instead of the first shaft portion 151 to which the rotor 24 is attached. As a result, an attachment portion of the generator with motor function 19 to the first shaft portion 151 can be easily assured in comparison to when the oil pump 49 is provided on the first shaft portion 151. The generator with motor function 19 is relatively larger in size than the conventional generator and therefore the ability to assure the attachment portion is effective in order to improve the layout ability.

Moreover, when the stator 25 is attached to the oil pump cover 23, there is a problem in that the tolerance for assembling the oil pump cover 23 effects the attachment precision of the stator 25. However, the stator 25 of the present embodiment is fixed directly to the first side wall 141 of the crankcase 14. As a result, the assembly precision of the stator 25 can be improved.

The cam chain 47 is disposed on the opposite side with respect to the generator with motor function 19. As a result, the freedom of design of the first wall side 141 is improved and the stiffness of the first side wall 141 can be assured easily. Moreover, the housing space for the generator with motor function 19 can be assured more easily.

The pump body 52 is aligned with the cam chain 47 in the radial direction of the cam chain sprocket 46. As a result, the pump body 52 can be disposed in a compact manner.

The cooling fan 18 is adjacent to the generator with motor function 19 in the axial direction. As a result, cooling of the generator with motor function 19 by the cooling fan 18 can be carried out effectively. Furthermore, while the calorific content of the generator with motor function 19 is greater than that of a conventional generator, a large space for heat dissipation can be easily assured by using the space in which the cooling fan 18 is disposed.

The sensor unit 26 is fixed to the stator 25. In this case, the propagation of heat from the crankcase 14 toward the sensor unit 26 can be suppressed in comparison to when the sensor unit 26 is attached to the crankcase 14. As a result, the effect of heat on the sensor unit 26 can be suppressed. In particular, the sensors 36-39 of the sensor unit 26 are Hall sensors with low heat resistance, and therefore the effect of suppressing the propagation of heat from the crankcase 14 toward the sensor unit 26 becomes more effective.

The oil seal 42 is attached to the recessed portion 148 that is recessed from the outer surface of the first side wall 141. As a result, the oil seal 42 can be attached and detached easily from the outside of the crankcase 14. Consequently, the maintenance performance of the engine 8 can be improved.

Although embodiments of the present invention have been described so far, the present invention is not limited to the above embodiments and various modifications may be made within the scope of the claims.

The straddle-type vehicle is not limited to a scooter-type vehicle and may be a moped or a sports type vehicle. The straddle-type vehicle is not limited to a motorcycle and may be an all-terrain vehicle or a snowmobile.

The structure inside the engine 8 may be changed. For example, the disposition of the cooling fan 18 may be changed. The disposition of the cam chain 47 may be changed. The disposition of the transmission 17 may be changed. The disposition of the oil pump 49 may be changed.

The structure of the first side wall 141 may be changed. For example, the protruding portion 146 may be omitted. The recessed portion 148 of the protruding portion 146 may be omitted. The position of the joining surface M1 between the first split body 20a and the second split body 20b of the crankcase 14 may be changed.

The structure of the sensor unit 26 is not limited to the structure of the above embodiment and may be changed. For example, the number of sensors is not limited to four and the number may be two, three, or five or more. The sensors may be a sensor type other than a Hall sensor. The coupling portion 40 may be omitted. The disposition of the sensors may be changed. The disposition of the sensor unit 26 may be changed.

The wording and expressions used herein are used for explanation and are not to be used for a limited interpretation. Various modifications may be permitted within the scope of the claims.

## Claims

1. An engine (8) comprising:
a crankcase (14);
a crankshaft (15) at least a portion of which is housed in the crankcase (14) and which rotates around an axis (Ax1) of the crankshaft (15);
a generator with motor function (19) including a rotor (24) fixed to the crankshaft (15) and a stator (25) fixed to the crankcase (14) while the crankshaft (15) passes through the stator (25); and
an oil pump (49) housed in the crankcase (14) and connected to the crankshaft (15),
wherein
the crankshaft (15) includes:
a first shaft portion (151) extending one way in an axial direction of the crankshaft (15) from an inside of the crankcase (14) toward an outside of the crankcase (14), the first shaft portion (151) being fixed to the rotor (24); and
a second shaft portion (152) extending the other way in the axial direction from the inside of the crankcase (14) toward the outside of the crankcase (14), the second shaft portion (152) being connected to the oil pump (49);
the crankcase (14) includes:
a crankcase body (20) including a first side wall (141) through which the first shaft portion (151) passes, and a second side wall (144) through which the second shaft portion (152) is disposed, the second side wall (144) including an opening portion (145) communicated with a housing space for the oil pump (49); and
an oil pump cover (23) through which the second shaft portion (152) passes, the oil pump cover (23) closing the opening portion (145) of the second side wall (144); and
the stator (25) is fixed to the first side wall (141).

2. An engine (8) according to claim 1, further comprising:
a cam chain sprocket (46) connected to the second shaft portion (152); and a cam chain (47) wound around the cam chain sprocket (46).

3. An engine (8) according to claim 2, wherein
the oil pump (49) includes
a pump gear (51) connected to the second shaft portion (152) and
a pump body (52) connected to the pump gear (51), and
the pump body (52) is aligned with the cam chain (47) in a radial direction of the cam chain sprocket (46).

4. An engine (8) according to any one of claims 1 to 3, further comprising:
a cooling fan (18) connected to the first shaft portion (151).

5. An engine (8) according to any one of claims 1 to 4, further comprising:
a sensor (36-39) for detecting a phase of the crankshaft (15), wherein
the sensor (36-39) is fixed to the stator (25).

6. An engine (8) according to claim 5, wherein
the sensor (36-39) is a Hall sensor.

7. An engine (8) according to any one of claims 1 to 6, wherein
the crankcase (14) includes:
a first opening (143) through which the first shaft portion (151) protrudes, and
a protruding portion (146) provided around the first opening (143), the protruding portion (146) protruding in the axial direction, and
the stator (25) is fixed directly to the protruding portion (146).

8. An engine (8) according to any one of claims 1 to 7, further comprising:
an oil seal (42) disposed between the crankcase (14) and the crankshaft (15), wherein
the crankcase (14) includes a recessed portion (148) provided around the first opening (143), the recessed portion (148) being recessed from an outer surface of the crankcase (14), and
the oil seal (42) is attached to the recessed portion (148).

9. An engine (8) according to any one of claims 1 to 8, wherein
the crankcase (14) includes:
a first split body (20a) on the first shaft portion side and
a second split body (20b) on the second shaft portion side, the second split body (20b) being separate from the first split body (20a).

10. An engine (8) according to any one of claims 1 to 9, wherein
the crankshaft (15) includes a crank web (153a, 153b) extending in a radial direction of the crankshaft (15), and
the first shaft portion (151) extends one way from the crank web (153a, 153b) in the axial direction.

11. An engine (8) according to any one of claims 1 to 10, wherein
the crankshaft (15) includes a crank web (153a, 153b) extending in the radial direction of the crankshaft (15), and
the second shaft portion (152) extends the other way from the crank web (153b) in the axial direction.

## Patentansprüche

1. Motor (8), der umfasst:
ein Kurbelgehäuse (14);
eine Kurbelwelle (15), wobei wenigstens ein Abschnitt derselben in dem Kurbelgehäuse (14) aufgenommen ist, und die sich um eine Achse (Ax1) der Kurbelwelle (15) herum dreht;
einen Generator mit Motor-Funktion (19), der einen an der Kurbelwelle (15) befestigten Läufer (15) sowie einen an dem Kurbelgehäuse (14) befestigten Ständer (25) enthält, wobei die Kurbelwelle (15) durch den Ständer (25) hindurch verläuft; und
eine Ölpumpe (49), die in dem Kurbelgehäuse (14) aufgenommen und mit der Kurbelwelle (15) verbunden ist,
wobei
die Kurbelwelle (15) enthält:
einen ersten Wellen-Abschnitt (151), der sich auf einer Seite in einer axialen Richtung der Kurbelwelle (15) von einer Innenseite des Kurbelgehäuses (14) zu einer Außenseite des Kurbelgehäuses (14) erstreckt, wobei der erste Wellen-Abschnitt (151) an dem Läufer (24) befestigt ist; und
einen zweiten Wellen-Abschnitt (152), der sich auf der anderen Seite in der axialen Richtung von der Innenseite des Kurbelgehäuses (14) zu der Außenseite des Kurbelgehäuses (14) erstreckt, wobei der zweite Wellen-Abschnitt (152) mit der Ölpumpe (49) verbunden ist;
wobei das Kurbelgehäuse (14) enthält:
einen Kurbelgehäuse-Körper (20), der eine erste Seitenwand (141), durch die der erste Wellen-Abschnitt (151) hindurch verläuft, und eine zweite Seitenwand (144) enthält, durch die hindurch der zweite Wellen-Abschnitt (152) angeordnet ist, wobei die zweite Seitenwand (144) einen Öffnungs-Abschnitt (145) einschließt, der mit einem Aufnahmeraum für die Ölpumpe (49) in Verbindung steht; sowie
einen Ölpumpen-Deckel (23), durch den der zweite Wellen-Abschnitt (152) hindurch verläuft, wobei der Ölpumpen-Deckel (23) den Öffnungs-Abschnitt (145) der zweiten Seitenwand (144) verschließt; und
der Ständer (25) an der ersten Seitenwand (141) befestigt ist.

2. Motor (8) nach Anspruch 1, der des Weiteren umfasst:
ein Steuerketten-Rad (46), das mit dem zweiten Wellen-Abschnitt (152) verbunden ist; sowie
eine Steuerkette (47), die um das Steuerketten-Rad (46) herum läuft.

3. Motor (8) nach Anspruch 2, wobei
die Ölpumpe (49) enthält:
ein Pumpen-Zahnrad (51), das mit dem zweiten Wellen-Abschnitt (152) verbunden ist, sowie
ein Pumpen-Gehäuse (52), das mit dem Pumpen-Zahnrad (51) verbunden ist, und
wobei das Pumpen-Gehäuse (52) in einer radialen Richtung des Steuerketten-Rades (46) mit der Steuerkette (47) fluchtend ist.

4. Motor (8) nach einem der Ansprüche 1 bis 3, der des Weiteren umfasst:
einen Lüfter (18), der mit dem ersten Wellen-Abschnitt (151) verbunden ist.

5. Motor (8) nach einem der Ansprüche 1 bis 4, der des Weiteren umfasst:
einen Sensor (36-39) zum Erfassen einer Phase der Kurbelwelle (15), wobei der Sensor (36-39) an dem Ständer (25) befestigt ist.

6. Motor (8) nach Anspruch 5, wobei
der Sensor (36-39) ein Hall-Sensor ist.

7. Motor (8) nach einem der Ansprüche 1 bis 6, wobei
das Kurbelgehäuse (14) enthält:
eine erste Öffnung (143), durch die der erste Wellen-Abschnitt (151) vorsteht, sowie
einen vorstehenden Abschnitt (146), der um die erste Öffnung (143) herum vorhanden ist, wobei der vorstehende Abschnitt (146) in der axialen Richtung vorsteht, und
der Ständer (25) direkt an dem vorstehenden Abschnitt (146) befestigt ist.

8. Motor (8) nach einem der Ansprüche 1 bis 7, der des Weiteren umfasst:
eine Öl-Dichtung (42), die zwischen dem Kurbelgehäuse (14) und der Kurbelwelle (15) angeordnet ist, wobei
das Kurbelgehäuse (14) einen vertieften Abschnitt (148) enthält, der um die erste Öffnung (143) herum vorhanden ist, wobei der vertiefte Abschnitt (148) von einer Außenfläche des Kurbelgehäuses (14) aus vertieft ist, und
die Öl-Dichtung (42) an dem vertieften Abschnitt (148) angebracht ist.

9. Motor (8) nach einem der Ansprüche 1 bis 8, wobei
das Kurbelgehäuse (14) enthält:
einen ersten Teil-Körper (20a) an der Seite des ersten Wellen-Abschnitts, sowie
einen zweiten Teil-Körper (20b) an der Seite des zweiten Wellen-Abschnitts, wobei der zweite Teil-Körper (20b) von dem ersten Teil-Körper (20a) getrennt ist.

10. Motor (8) nach einem der Ansprüche 1 bis 9, wobei
die Kurbelwelle (15) einen Kurbelarm (153a, 153b) enthält, der sich in einer radialen Richtung der Kurbelwelle (15) erstreckt, und
sich der erste Wellen-Abschnitt (151) auf einer Seite von dem Kurbelarm (153a, 153b) in der axialen Richtung erstreckt.

11. Motor (8) nach einem der Ansprüche 1 bis 10, wobei
die Kurbelwelle (15) einen Kurbelarm (153a, 153b) enthält, der sich in der radialen Richtung der Kurbelwelle (15) erstreckt, und
sich der zweite Wellen-Abschnitt (152) auf der anderen Seite von dem Kurbelarm (153b) in der axialen Richtung erstreckt.

## Revendications

1. Moteur (8) comprenant :
un carter moteur (14) ;
un vilebrequin (15) dont au moins une partie est logée dans le carter moteur (14) et qui tourne autour d'un axe (Ax1) du vilebrequin (15) ;
un générateur ayant une fonction motrice (19) comprenant un rotor (24) fixé au vilebrequin (15) et un stator (25) fixé au carter moteur (14) alors que le vilebrequin (15) passe à travers le stator (25) ; et
une pompe à huile (49) logée dans le carter moteur (14) et reliée au vilebrequin (15),
dans lequel
le vilebrequin (15) comprend :
une première partie d'arbre (151) s'étendant dans un sens dans une direction axiale du vilebrequin (15) depuis un intérieur du carter moteur (14) vers un extérieur du carter moteur (14), la première partie d'arbre (151) étant fixée au rotor (24) ; et
une seconde partie d'arbre (152) s'étendant dans l'autre sens dans la direction axiale depuis l'intérieur du carter moteur (14) vers l'extérieur du carter moteur (14), la seconde partie d'arbre (152) étant reliée à la pompe à huile (49) ;
le carter moteur (14) comprend :
un corps de carter moteur (20) comprenant une première paroi latérale (141) à travers laquelle passe la première partie d'arbre (151), et une seconde paroi latérale (144) à travers laquelle la seconde partie d'arbre (152) est disposée, la seconde paroi latérale (144) comprenant une partie d'ouverture (145) en communication avec un espace de logement pour la pompe à huile (49) ; et
un couvercle de pompe à huile (23) à travers lequel passe la seconde partie d'arbre (152), le couvercle de pompe à huile (23) fermant la partie d'ouverture (145) de la seconde paroi latérale (144) ; et
le stator (25) est fixé à la première paroi latérale (141).

2. Moteur (8) selon la revendication 1, comprenant en outre :
un pignon de chaîne à came (46) relié à la seconde partie d'arbre (152) ; et
une chaîne à came (47) enroulée autour du pignon de chaîne à came (46).

3. Moteur (8) selon la revendication 2, dans lequel
la pompe à huile (49) comprend
un engrenage de pompe (51) relié à la seconde partie d'arbre (152) et
un corps de pompe (52) relié à l'engrenage de pompe (51), et
le corps de pompe (52) est aligné avec la chaîne à came (47) dans une direction radiale du pignon de chaîne à came (46).

4. Moteur (8) selon l'une quelconque des revendications 1 à 3, comprenant en outre :
un ventilateur de refroidissement (18) connecté à la première partie d'arbre (151).

5. Moteur (8) selon l'une quelconque des revendications 1 à 4, comprenant en outre :
un capteur (36-39) pour détecter une phase du vilebrequin (15), dans lequel le capteur (36-39) est fixé au stator (25).

6. Moteur (8) selon la revendication 5, dans lequel
le capteur (36-39) est un capteur à effet Hall.

7. Moteur (8) selon l'une quelconque des revendications 1 à 6, dans lequel
le carter (14) comprend :
une première ouverture (143) à travers laquelle la première partie d'arbre (151) fait saillie, et
une partie en saillie (146) agencée autour de la première ouverture (143), la partie en saillie (146) faisant saillie dans la direction axiale, et
le stator (25) est fixé directement à la partie en saillie (146).

8. Moteur (8) selon l'une quelconque des revendications 1 à 7, comprenant en outre :
un joint étanche à l'huile (42) disposé entre le carter moteur (14) et le vilebrequin (15), dans lequel
le carter moteur (14) comprend une partie évidée (148) agencée autour de la première ouverture (143), la partie évidée (148) étant évidée depuis une surface extérieure du carter moteur (14), et
le joint étanche à l'huile (42) est fixé à la partie évidée (148).

9. Moteur (8) selon l'une quelconque des revendications 1 à 8, dans lequel le carter moteur (14) comprend :
un premier corps fendu (20a) du côté de la première partie d'arbre et
un second corps fendu (20b) du côté de la seconde partie d'arbre, le second corps fendu (20b) étant séparé du premier corps fendu (20a).

10. Moteur (8) selon l'une quelconque des revendications 1 à 9, dans lequel
le vilebrequin (15) comprend un bras de vilebrequin (153a, 153b) s'étendant dans une direction radiale du vilebrequin (15), et
la première partie d'arbre (151) s'étend dans un sens depuis le bras de vilebrequin (153a, 153b) dans la direction axiale.

11. Moteur (8) selon l'une quelconque des revendications 1 à 10, dans lequel
le vilebrequin (15) comprend un bras de vilebrequin (153a, 153b) s'étendant dans la direction radiale du vilebrequin (15), et
la seconde partie d'arbre (152) s'étend dans l'autre sens depuis le bras de vilebrequin (153b) dans la direction axiale.
